# EUROPÄISCHE PATENTSCHRIFT

(11) **EP 1 599 307 B1**
(45) Veröffentlichungstag und Bekanntmachung des Hinweises auf die Patenterteilung: **25.12.2013**
(21) Anmeldenummer: 04717548.4
(22) Anmeldetag: 05.03.2004
(51) Int. Cl.: B23C 5/20, B23C 5/22, B23B 51/10, B23B 27/16

(54) **Zusammenstellung eines Fräskopfs und einer Wendeplatte zum fasen**
Assembly of a milling head and an indexable tip for beveling
Assemblage d'une tête de fraisage et d'une plaquette indexable servant à chanfreiner

(30) Priorität: 06.03.2003 DE 10310098; 05.05.2003 DE 10320173
(43) Veröffentlichungstag der Anmeldung: 30.11.2005
(60) Teilanmeldung: 11186722.2
(73) Patentinhaber: Rieth, Stephan, D-66606 St. Wendel (DE)
(72) Erfinder: Rieth, Stephan, D-66606 St. Wendel (DE)
(74) Vertreter: Bernhardt, Reinhold
(86) Internationale Anmeldenummer: PCT/DE2004/000439
(87) Internationale Veröffentlichungsnummer: WO 2004/078395

(56) Entgegenhaltungen:
- EP-A- 0 175 053
- DE-A- 1 602 795
- DE-B- 1 211 469
- DE-C- 3 730 943
- US-A- 3 701 187
- US-A- 4 729 697
- US-A- 5 006 020
- US-A- 5 913 643
- AB Sandvik Coromant: "Rotating Tools 2001", 1 February 2001 (2001-02-01), Elanders, Sweden page A 120,

## Beschreibung

Die Erfindung betrifft eine Zusammenstellung eines Fräskopfes und einer Wendeplatte zum Fasen.

Aus dem Katalog AB Sandvik Coromant: "Rotating Tools 2011" 1. Februar 2001 (2001-02-01), Elanders, Sweden, Seite A 120 ist eine Zusammenstellung eines zylindrischen Fräskopfs mit einer Wendeplatte zum Fräsen von Taschen bekannt. Der Katalog zeigt Wendeplatten, die eine Bohrung von der Freifläche zur Auflagefläche der Wendeplatte für den Durchtritt eines Befestigungsmittel und Wendemöglichkeit durch Verdrehen der Wendeplatte um die Achse der Bohrung sowie durch Umkehrung unter Vertauschung der vorherigen Auflagefläche und Freifläche bietet. Der Keilwinkel der Wendeplatte beträgt 74 ° 30'.

Aus der US 4,729,697 ist als Erfindung eine weitere Zusammenstellung eines zylindrischen Fräskopfs mit Wendeplatten beschrieben. Die Wendeplatten sind ebenfalls mit einer Bohrung von der Frei- zur Auflagefläche für den Durchtritt eines Befestigungsmittel versehen und es besteht eine Wendemöglichkeit durch Verdrehen der Wendeplatte um die Achse der Bohrung und eine weitere Wendemöglichkeit unter Umkehrung unter Vertauschung der vorherigen Auflage- und Freifläche. Der Keilwinkel der Wendeplatten beträgt etwa 90 °. Die Wendeplatten sind derart auf dem Fräskopf angeordnet, dass ein negativer Spanwinkel besteht, und auf ihren Auflage- bzw. Freiflächen zur Schneidkante hin gewinkelt, so dass bei der Anordnung auf den Fräskopf ein gewisser Freiwinkel gebildet ist. Zur Erläuterung der Erfindung nach der US 4,729,697 sind Anordnungen von Wendeplatten, die die genannte Winklung auf den Auflage- bzw. Freiflächen hin zur Schneidkante nicht aufweisen, mit dem Fräskopf gezeigt, wobei diese Wendeplatten derart auf dem Fräskopf angeordnet sind, dass ein geringer positiver Spanwinkel gebildet wird. Diese Anordnungen werden allerdings als stark übertrieben und nachteilhaft beschrieben.

Eine weitere Wendeplatte geht aus der DE 37 30 943 C1 hervor.

Ferner ist durch Benutzung eine Wendeplatte bekannt, die bei nur etwa 6,5 mm Breite zwischen ihren beiden Schneidkanten und 5 mm Breite der Auflagefläche und weniger als 3 mm Dicke eine längliche Form mit trapezförmigem Querschnitt hat und in verhältnismäßig großer Zahl auf dem konischen Fräskopf angeordnet werden kann. Auf dem Umfang eines konischen Fräskopfs beispielsweise, der einen kleinsten Durchmesser von 25 mm und einen Konuswinkel zwischen 10 und 170° hat, finden am kleinsten Umfang acht Wendeplatten Platz. Dazu trägt neben der geringen Breite die stehende Anordnung der Wendeplatten bei, da sie keinen Freiraum in Umfangsrichtung für das Ansetzen des Befestigungswerkzeugs, in der Regel eines Schraubendrehers, verlangt. Die geschliffenen und daher im Vergleich mit nur gesinterten Wendeplatten präzisen und scharfen Kanten ermöglichen eine hohe Schnittgeschwindigkeit bei geringer Kraftausübung. Die Anordnung auf dem Schneidkopf mit geringem Radius lässt darüber hinaus nur ein kleines Drehmoment entstehen, dem leicht gegengehalten werden kann, so dass eine leichte Ausführung der Maschine einschließlich einer nur leichten Einspannung des Werkstücks möglich ist und die Anordnung auch für eine mobile Handfräsmaschine geeignet ist.

Schließlich ist aus der EP 0 175 053 ein Kegelsenker zur Erzeugung von Absätzen in Bohrungen bekannt, der eine konische Form aufweist.

Der Erfindung liegt die Aufgabe zugrunde, die Abtragsleistung beim Fasen zu steigern.

Gemäß der Erfindung wird diese Aufgabe gelöst durch eine Zusammenstellung eines Fräskopfs und einer Wendeplatte zum Fasen, wobei der Fräskopf konisch oder zylindrisch ist, die Wendeplatte mit geschliffenen Schneidkanten und einer Bohrung von der Freifläche zur Auflagefläche der Wendeplatte für den Durchtritt eines einen Kopf aufweisenden Befestigungsmittels versehen ist und eine Wendemöglichkeit durch Verdrehen der Wendeplatte um die Achse der Bohrung vorgesehen ist,
wobei die Wendeplatte auch eine Wendemöglichkeit durch Umkehren unter Vertauschung der vorherigen Auflagefläche und Freifläche bietet und an ebenen und/oder konkaven Spanflächen gebildete Schneidkanten aufweist, wobei der Keilwinkel der an ebenen Spanflächen gebildeten Schneidkanten 40 bis 75° beträgt und der Keilwinkel der an konkaven Spanflächen gebildeten Schneidkanten 10 bis 60° beträgt und die Wendeplatte zur Anordnung auf einer Sitzfläche des Fräskopfes vorgesehen ist, auf der ihr wirksamer Spanwinkel bei ebenen Spanflächen 6 bis 47° und bei konkaven Spanflächen 15 bis 75° und ihr Freiwinkel 2 bis 25° beträgt.

Die vorgesehene Wendeplatte kann zwar nur in geringerer Zahl auf dem Fräskopf platziert werden als die beschriebene durch Benutzung bekannte Wendeplatte; bei dem erwähnten Beispiel sind es statt acht noch fünf Wendeplatten. Das Gesamtergebnis wird trotzdem günstiger.

Die Wendemöglichkeit durch Umkehren bedeutet, dass sich die Wendeplatte zur Bildung von mindestens zwei weiteren Schneidkanten von ihrer Dickenmitte aus zur Auflagefläche hin wieder verbreitert. Mit der Gewinnung der weiteren Schneidkanten, die die Lebensdauer entsprechend erhöhen, ist daher auch ein besserer Sitz der Wendeplatte auf dem Fräskopf verbunden, wodurch eine größere Laufruhe und damit Präzision der Bearbeitung erreicht wird. Dazu trägt auch die infolge der Verbreiterung der Platte insgesamt ermöglichte Vergrößerung der Bohrung und Befestigung mittels einer stärkeren Schraube o. dgl. bei. Die breitere Platte hat im übrigen größere Festigkeit. Da die Platte dank ihrer breiteren Auflagefläche und anderen Querschnittsform aber auch dicker als nach dem Stand der Technik bemessen werden kann, hat man ferner eine große Freiheit, bei gleichbleibender Breite der Platte unter Veränderung ihrer Dicke den Keilwinkel je nach dem zu bearbeitenden Material zu variieren und einen günstigen Spanwinkel sowie einen geeigneten Freiwinkel einzurichten; trotz der verringerten Zahl der Wendeplatten kann so die Abtragsleistung sogar gesteigert werden. Darüber hinaus werden an den doppelten, zueinander gewinkelten Spanflächen die Späne besser abgeführt.

Die beiden genannten Flächen werden in der Regel eine Breite von mindestens 5,5 mm, vorzugsweise von 6 bis 12 mm haben.
Die Dicke der Schneidplatte mag normalerweise 4 bis 10 mm betragen.

Vorzugsweise und in der Regel weist die Wendeplatte an denjenigen Seiten, die die möglichen Spanflächen aufweisen, eine die betreffenden beiden Spanflächen bildende Einkehlung auf, die, abgesehen von etwaigen Ein- oder Ausbiegungen ihrer die Schneidkanten bildenden Ränder, einen durchgehend gleichbleibenden und zu der die Bohrung schneidenden Mittelebene der Wendeplatte spiegelbildlichen Querschnitt hat.
Hier kann das Schleifen, ggf. auch ein Nachschleifen, der beiden Spanflächen sehr einfach in einem Arbeitsgang vorgenommen werden im Gegensatz zu den zahlreichen in anderem Zusammenhang bekannten Gestaltungen von Wendeplatten, bei denen die beiden Spanflächen etwas gegeneinander winkelversetzt sind.

In der Regel werden die betreffenden beiden Spanflächen eben sein und vorzugsweise in einem Winkel von 80 bis 160° zueinander stehen.

Die beiden Spanflächen können aber auch entsprechend einer Einkehlung runden Querschnitts konkav sein. Diese Gestaltung erlaubt einen scharfen Keilwinkel.

An den ebenen Spanflächen kann der Keilwinkel schärfer gestaltet werden durch eine schmale Kehlnut unter der Schneidkante in der Spanfläche.

In besonderen Fällen kann auch an den Spanflächen und/oder den Freiflächen eine schmale Fase geschliffen werden, um einen stumpferen Keilwinkel zu erzeugen.

Zum Zweck einer weiteren Erhöhung ihrer Lebensdauer kann die Wendeplatte zufolge einer die beiden erstgenannten Flächen über den Kopf des vorgesehenen Befestigungsmittels anhebenden Dickenzugabe, mit der die Dicke der Wendeplatte die Tiefe des vorgesehenen Sitzes der Wendeplatte an dem Fräskopf übersteigt, zur Schärfung der Schneidkanten nachschleifbar sein.
In einer ersten Variante ist diese Wendeplatte an den erstgenannten Flächen sowie an den Spanflächen nachschleifbar, und eine der jeweils benutzten Spanfläche an der Freifläche gegenüberliegende mögliche Spanfläche ist zur alleinigen Abstützung der Wendeplatte gegen die Schneidkraft an einer, vorzugsweise gleich ausgerichteten, Schrägfläche des Fräskopfs im Zusammenwirken mit der Befestigung der Wendeplatte auf der Sitzfläche des Fräskopfs durch das Befestigungsmittel vorgesehen.

In einer zweiten Variante ist die Wendeplatte an den erstgenannten Flächen unter einem flachen Winkel von 2 bis 10° zu den Spanflächen hin gefast und an den Fasenflächen nachschleifbar und zur Anordnung auf einer Sitzfläche des Fräskopfs vorgesehen, die unter dem um den Fasenwinkel vergrößerten Freiwinkel schräggestellt ist.

Bei der ersten Variante ermöglicht die vorgesehene Abstützung das Nachschleifen der Wendeplatte auf den erstgenannten Flächen in Verbindung mit einem Nachschleifen an den Spanflächen: Sind beide möglichen Freiflächen, also auch die Auflagefläche der Wendeplatte, abgeschliffen, so wird die Auflagefläche wieder in Berührung mit der Sitzfläche des Werkzeugs gebracht, indem die möglichen Spanflächen in entsprechendem Maße abgeschliffen werden. Auf jeden Fall ist dann eine Berührung zwischen der unter der abgestützten möglichen Spanfläche liegenden Spanfläche und dem Werkzeug nicht mehr möglich.

Dem trägt die vorgesehene Abstützung Rechnung.

Bis zu dem Abschleifen könnte formschlüssiger Eingdff mit einer Abstützung an beiden möglichen Spanflächen bestehen.

Vorzugsweise ist der Wendeplatte jedoch ein Fräskopf zugeordnet, an dem sich von vornherein von der Schrägfläche bis zu der Sitzfläche ein Freiraum erstreckt und somit die vorgesehene Abstützung von Anfang an vorhanden ist. Diese Abstützung ist insofern grundsätzlich günstig, als sie die Schneidkraft ziemlich direkt aufnimmt und eine Scher- und/oder Biegebeanspruchung der Wendeplatte ausschließt. Sie ist daher bei den erfindungsgemäßen Wendeplatten allgemein bevorzugt, die wegen ihrer Einkerbung an den Spanflächen gegen derartige Beanspruchungen ggf. etwas empfindlich sind.
Unabhängig davon wird als weitere Ausgestaltung ein zwischen der Schrägfläche und der Sitzfläche ausgebildeter Freiraum vorgeschlagen, der um die dartige(n) Schneidkante(n) herumgeführt ist, so dass er an benutzten Schneidkanten etwa entstandene Grate aufnehmen kann und diese die Auflage der Wendeplatte nicht stören können.

Bei der zweiten Variante verbleibt zwischen den Fasen eine auf der Sitzfläche liegende Auflagefläche. Ein Nachschleifen der Spanflächen ist nicht notwendig. Die Platte könnte insofern an dem Werkzeug ein Widerlager erhalten, das in den Winkel zwischen den beiden dortigen möglichen Spanflächen greift. Sie kann aber auch an einem gleichen Werkzeug eingesetzt werden, wie es für die erste Variante zwingend und, wie gesagt, bevorzugt ist.

Im übrigen ragt die nachschleifbare Wendeplatte, wie schon angedeutet, etwa um die Dickenzugabe aus ihrem Sitz an dem Werkzeug heraus. Mit Rücksicht auf die Festigkeit der Wendeplatte sollte die Bohrung jeweils über einen Sitz für den Kopf des Befestigungsmittels in den beiden Bereichen der Dickenzugabe zylindrisch sein, d.h. keinen größeren Durchmesser als nötig haben.

Die erfindungsgemäßen Wendeplatten können insbesondere die form eines Rechtecks oder eines Quadrates haben.

Die Zeichnungen geben Ausführungsbeispiele der Erfindung wieder.
- Fig. 1: zeigt eine Wendeplatte für einen Fräskopf in isometrischer Darstellung,
- Fig. 2: zeigt den zugehörigen Fräskopf in isometrischer Darstellung,
- Fig. 3: zeigt ausschnittweise einen Querschnitt durch den Fräskopf und die Wendeplatte,

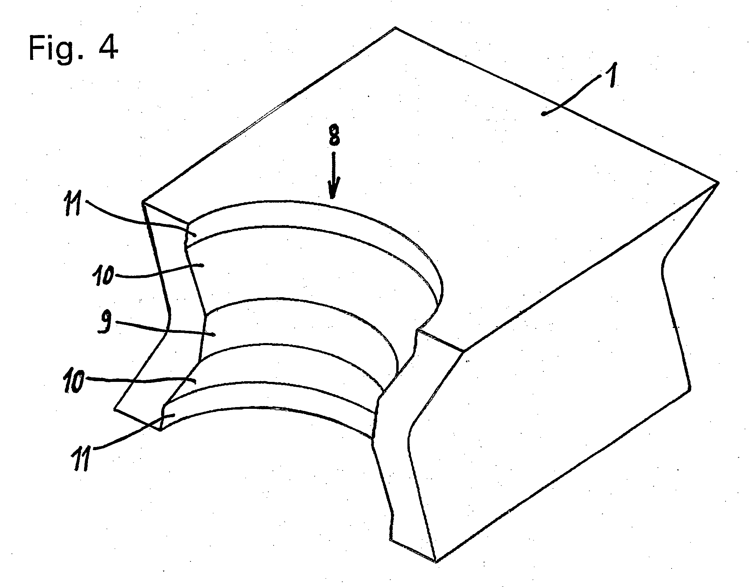

- Fig. 4: zeigt die Wendeplatte in einer etwa gleichen isometrischen Darstellung wie Fig. 1, in der Mitte quer durchgeschnitten,
- Fig. 5: zeigt eine zweite Wendeplatte in isometrischer Darstellung,
- Fig. 6: zeigt eine dritte Wendeplatte in isometrischer Darstellung,
- Fig. 7: zeigt eine vierte Wendeplatte in einem Fig. 3 entsprechenden Querschnitt, und
- Fig. 8: zeigt eine fünfte Wendeplatte in einem Fig. 3 entsprechenden Querschnitt.

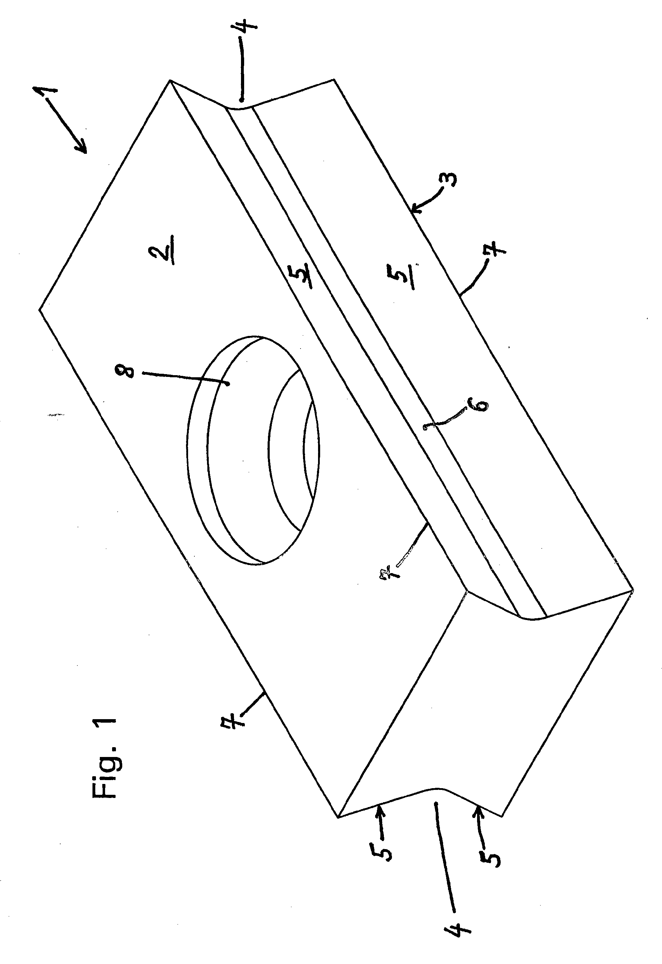

Die in Fig. 1 dargestellte Wendeplatte 1 ist rechteckig, d.h. sie hat eine quaderförmige Grundform. Die beiden Breitseiten sind bei der Benutzung als Freifläche 2 und Auflagefläche 3 und umgekehrt bestimmt. An den beiden Längsschmalseiten sind jeweils durch eine zur Mittelebene der Wendeplatte 1 symmetrische Einkehlung 4 von durchgehend gleichbleibendem Querschnitt zwei mögliche Spanflächen 5 gebildet mit einem ausgerundeten Übergang 6 dazwischen. Durch die Schnitte der ebenen Spanflächen 5 mit der Freifläche 2 und der Auflagefläche 3, die eine weitere mögliche Freifläche darstellt, ergeben sich vier geradlinige mögliche Schneidkanten 7.
Eine von der einen Breiteseite zur anderen durchgehende mittige Bohrung 8 weist beiderseits eines zylindrischen mittleren Abschnitts 9 zwei kegelförmige Sitze 10 für einen Schraubenkopf und darüber einen zylindrischen Anschnitt 11 auf.

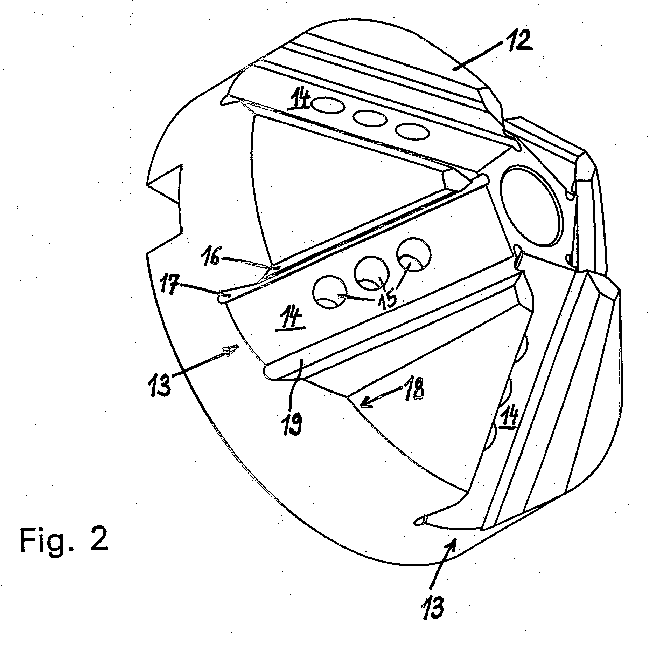

Fig. 2 lässt einen Fasenfräskopf 12 mit fünf Sitzen 13 für eine Wendeplatte 1 erkennen.
Die Sitze 13 umfassen jeweils eine Sitzfläche 14 für die Auflagerfläche 3 der Wendeplatte, drei, wahlweise zu verwendende, Gewindebohrungen 15 füreine Schraube, mittels derer die Wendeplatte 1 unter Verwendung der Bohrung 8 auf dem Sitz 13 zu befestigen ist, sowie eine Schrägfläche 16, an der dabei die der aktuellen Spanfläche 5 an der Freifläche 2 gegenüberliegende (in Unterscheidung zu der in der Einkehlung 4 gegenüberliegenden) mögliche Spanfläche 5 zur Anlage kommt.

Die Wendeplatte steht hier um ihre Dickenzugabe 35 aus dem Sitz 13 heraus.

Von der Schrägfläche 16 erstreckt sich entlang der anschließenden möglichen Spanfläche 5 und um deren Schneidkante 7 herum eine schmaler Freiraum 17.

Auf der anderen Seite liegt die Wendeplatte 1 an einem Rücksprung 18 und einem Ausschnitt 19 des Fasenfräskopfs 12 frei.

Der Pfeil 20 verdeutlicht die Bewegungsrichtung, der gestrichelte Pfeil 21 die Spanung durch die Schneidkante 7 und den Abfluss der Späne über die Spanflächen 5.

Die Wendemöglichkeiten sind aus den Darstellungen von selbst ersichtlich.

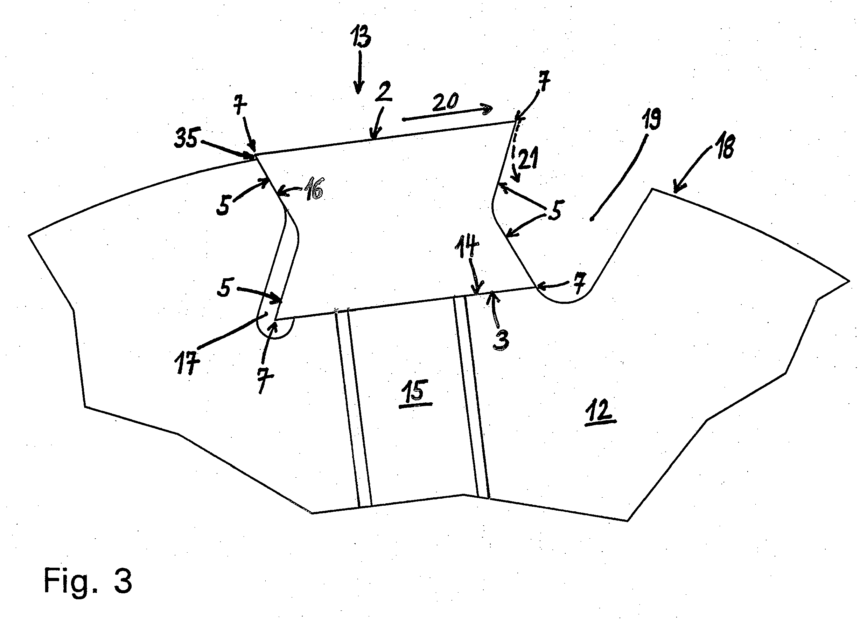

Zusätzlich können, nachdem alle vier Schneidkanten 7 abgenutzt sind, die Schneidkanten 7 nachgeschliffen werden.
Werden zu diesem Zweck die beiden Breitseiten der Wendeplatte 1 abgeschliffen, was zur Schärfung der Schneidkanten an sich genügen würde, so müssen auch die Einkehlungen 4 um so viel nachgeschliffen werden, dass die Auflagefläche 3 der Wendeplatte 1 die Sitzfläche 14 des Fasenfräskopfes 12 berührt. Die in Fig. 3 links oben herausragende Schneidkante 7 rutscht damit tiefer.
Die Höhe der zylindrischen Abschnitte 11 der Bohrung 18 stellt die zum Abschleifen zur Verfügung gestellte Materialzugabe an der Wendeplatte 1 dar.

Die vier Kanten an den Enden der beiden Breitseiten könnten gefast oder abgerundet sein, um ein volles Eindringen der Wendeplatte in das Material, wobei die scharfen Ecken stören würden und Verschleiß und Beschädigungsgefahr ausgesetzt wären, zu erleichtern. Das kommt besonders bei kürzeren, auf dem Fräskopf hintereinander angeordneten Wendeplatten in Betracht.

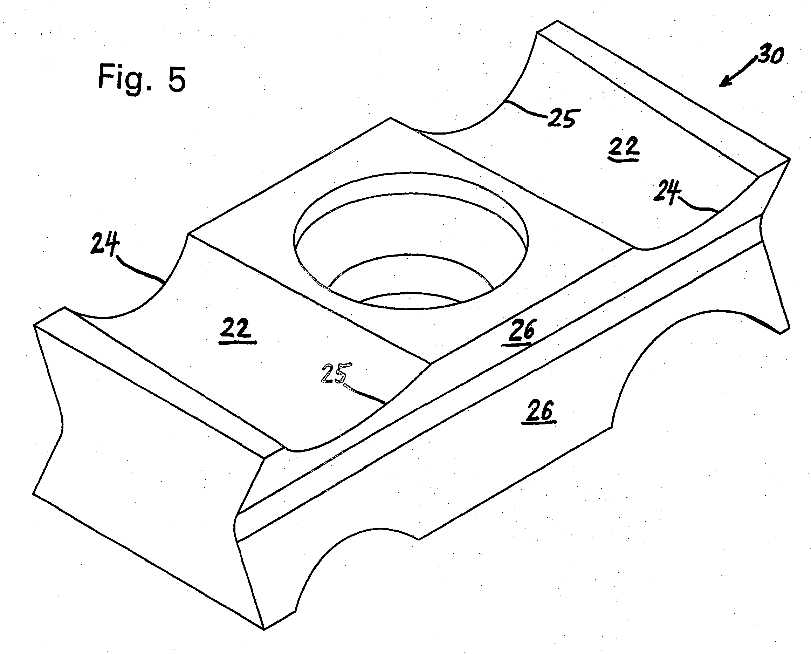

Die in Fig. 5 gezeigte Wendeplatte 21 hat ebenfalls eine rechteckige bzw. quaderförmige Grundform. Sie unterscheidet sich von der Wendeplatte 1 durch an ihren möglichen Freiflächen eingeformte flache Mulden 22, die sich in dem Beispiel über die Breite der Freifläche erstrecken und mit ihren Ausmündungen an den möglichen Spanflächen jeweils eine eingebuchtete Schneidkante von einem Viertelkreis erzeugen. Die Einbuchtungen sind mit 24 und 25 bezeichnet; mit Rücksicht auf die Abführung der Späne wird die kleinere Einbuchtung 24 bevorzugt als die Schneidkante benutzt. Die Spiegelsymmetrie der, mit 26 bezeichneten, Spanflächen ist im übrigen erhalten geblieben.

Mit den Einbuchtungen 24 und 25 wird der Schneidkante eine Form verliehen, die Kanten zu verrunden erlaubt. Hierfür wird nur mit der eingebuchteten Schneidkante geschnitten.
Eine andere Nutzungsmöglichkeit der Wendeplatte ist, nur mit den geradlinigen Schneidkanten zwischen den und/oder jenseits der Einbuchtungen zu schneiden und mit der Einbuchtung nicht. Dadurch wird trotz großer und entsprechend gut abgestützter Schneidplatte nur mit einer kürzeren Schneidkante geschnitten. Die Schneidkante kann dadurch mit weniger Kraftausübung in das Material eindringen. Das an den Einbuchtungen stehen gebliebene Material kann dann durch eine nachfolgende Schneidplatte abgetragen werden, deren Schneidkante dabei wiederum nur auf einer küzeren Lönge wirksam wird.
Eine dritte Nutzungsmöglichkeit besteht darin, mit der Schneidkante auf voller Länge zu arbeiten, d.h. auf den geradlinigen und auf den eingebuchteten Abschnitten und so ein Zierrelief zu erzeugen.

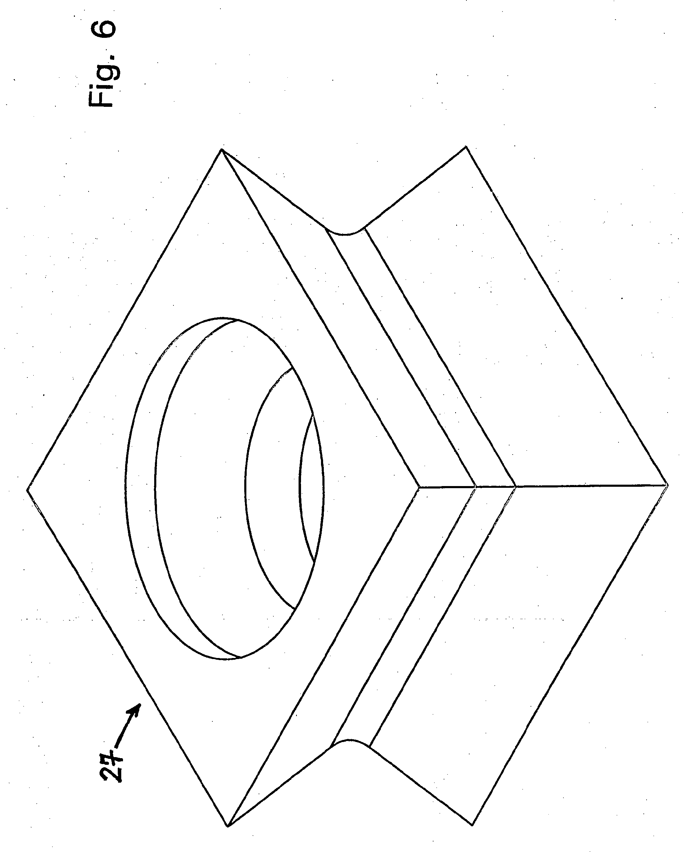

Die Wendeplatte 27 nach Fig. 6 ist quadratisch. Sie bietet also acht Schneidkanten. Es gilt Entsprechendes wie vorstehend erläutert.

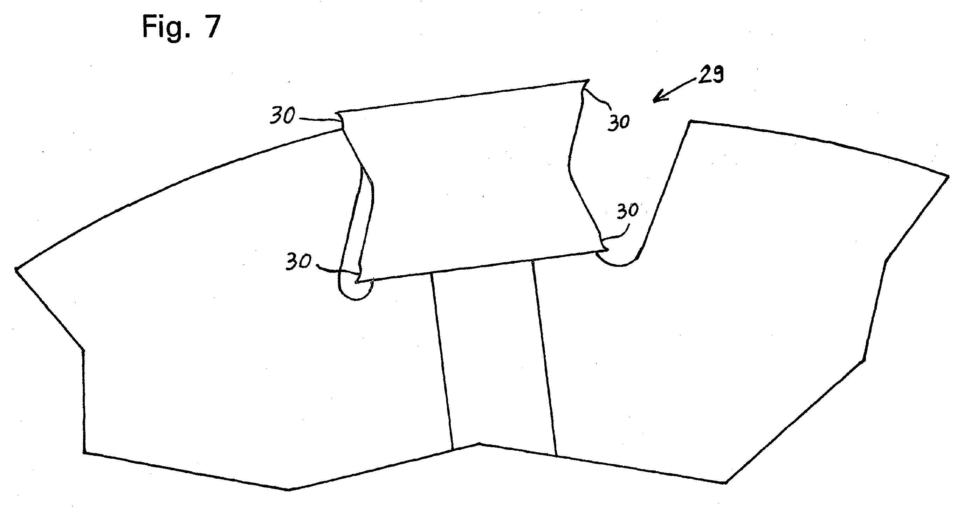

Fig. 7 lässt eine im ganzen gleiche Wendeplatte 29 wie in Fig. 3 erkennen, bei der jedoch unter den Schneidkanten jeweils eine schmale Kehlnut 30 eingeformt ist.

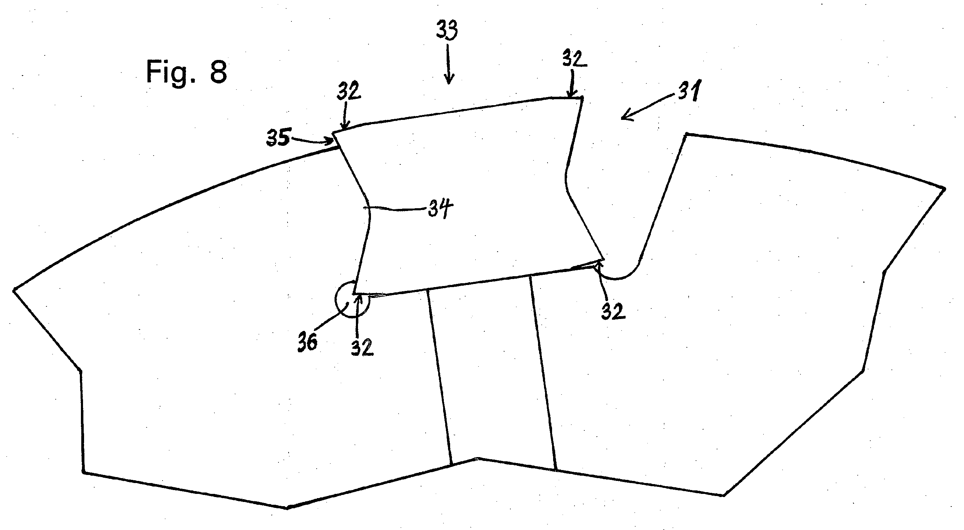

Fig. 8 zeigt als die oben erwähnte zweite Variante eine Wendeplatte 31 mit flachen Fasen 32 an der Freifläche und der Auflagefläche. Sie hat in dem zugehörigen Werkzeug einen Sitz 33 mit einem zu der, hier ebenfalls vorhandenen, Einkehlung 4 komplementären, gegen die Schneidkraft abstützenden Widerlager 34.

Ein um die mögliche Schneidkante herumgeführter Freiraum 36 ist auch hier eingerichtet. Der Fasenwinkel beträgt beispielsweise 5° und der Freiwinkel beträgt z.B. an der Fase 3° und an der übrigen Freifläche 8°.
Der Plattensitz in dem Werkzeug ist vorzugsweise zur Drehachse des Werkzeugs derart ausgerichtet, dass die Schneidkante schräg und scherend in das Material eingreift und einen kurzen "Komma-Span" erzeugt.

Die erfindungsgemäße Wendeplatte ist vorgesehen zum Anfasen von Kanten im weitesten Sinne unter Winkeln von 0 bis 85° mittels walzenförmiger oder kegelförmiger Fräsköpfe. Insbesondere in Betracht stehen das Anarbeiten von Schweißfasen, optischen Fasen und Kantenverrundungen an gerade verlaufenden Kanten und Konturen von Werkstücken aus Aluminium(legierungen), Stahl und anderen höherfesten Werkstoffen.
Die Wendeplatten, die in der Regel eine Länge von 6 bis 30 mm haben werden, können an dem Fräskopf auch in Längsrichtung hintereinander aneinanderstoßend oder versetzt angeordnet werden.

Nachgeschliffene Wendeplatten erhalten in der Regel die gleichen Nachbehandlungen an den Kanten wie bei der Herstellung, so dass sie dann neuwertig sind. Zu diesen Nachbehandlungen gehören das Nachschleifen der erwähnten schmalen Kehlnuten oder schmalen Fasen an den Spanflächen und/oder Freiflächen, desgleichen Verrundungen der Schneidkanten zur Entfernung der größten Schärfe sowie die Erneuerung einer ggf. vorhandenen Beschichtung, z.B. aus Titannitrid.

## Patentansprüche

1. Zusammenstellung eines Fräskopfs (12) und einer Wendeplatte (1; 21; 27; 29; 31) zum Fasen, wobei der Fräskopf konisch oder zylindrisch ist, die Wendeplatte mit geschliffenen Schneidkanten (7) und einer Bohrung (8) von der Freifläche (2) zur Auflagefläche (3) der Wendeplatte für den Durchtritt eines einen Kopf aufweisenden Befestigungsmittels versehen ist und eine Wendemöglichkeit durch Verdrehen der Wendeplatte um die Achse der Bohrung vorgesehen ist,
wobei die Wendeplatte auch eine Wendemöglichkeit durch Umkehren unter Vertauschung der vorherigen Auflagefläche und Freifläche bietet und an ebenen oder konkaven Spanflächen (5) gebildete Schneidkanten aufweist, wobei der Keilwinkel der an ebenen Spanflächen gebildeten Schneidkanten 40 bis 75° beträgt und der Keilwinkel der an konkaven Spanflächen gebildeten Schneidkanten 10 bis 60° beträgt und die Wendeplatte zur Anordnung auf einer Sitzffäche des Fräskopfes vorgesehen ist, auf der ihr wirksamer Spanwinkel bei ebenen Spanflächen 6 bis 47° und bei konkaven Spanflächen 15 bis 75° und ihr Freiwinkel 2 bis 25° beträgt.

2. Zusammenstellung nach Anspruch 1,
**dadurch gekennzeichnet,**
**dass** die beiden erstgenannten Flächen eine Breite von 5,5 bis 12 mm haben.

3. Zusammenstellung nach Anspruch 1 oder 2,
**dadurch gekennzeichnet,**
**dass** die Wendeplatte an denjenigen Seiten, die die möglichen Spanflächen (5) aufweisen, eine die betreffenden beiden Spanflächen (5) bildende Enkehlung (4) aufweist, die, abgesehen von etwaigen Ein- und/oder Ausbiegungen (24;25) ihrer die Schneidkanten (7) bildenden Ränder, einen durchgehend gleichbleibenden und zu der die Bohrung (8) schneidenden Mittelebene der Wendeplatte (1) spiegelbildlichen Querschnitt hat.

4. Zusammenstellung nach Anspruch 3,
**dadurch gekennzeichnet,**
**dass** die betreffenden beiden Spanflächen (5) eben sind und vorzugsweise in einem Winkel von 80 bis 160° zueinander stehen.

5. Zusammenstellung nach Anspruch 3,
**dadurch gekennzeichnet,**
**dass** die beiden Spanflächen entsprechend einer Einkehlung runden Querschnitts konkav sind.

6. Zusammenstellung nach einem der Ansprüche 1 bis 5,
**dadurch gekennzeichnet,**
**dass** die Wendeplatte an den Schneidkanten eine schmale Kehlnut (30) in der Spanfläche aufweist.

7. Zusammenstellung nach einem der Ansprüche 1 bis 6,
**dadurch gekennzeichnet,**
**dass** eine der jeweils benutzten Spanfläche (5) an der Freifläche (2) gegenüberliegende mögliche Spanfläche (5) zur alleinigen Abstützung der Wendeplatte gegen die Schneidkraft an einer, vorzugsweise gleich ausgerichteten, Schrägfläche (16) des Fräskopfs (12) im Zusammenwirken mit der Befestigung der Wendeplatte auf der Sitzfläche (14) des Fräskopfs durch das Befestigungsmittel vorgesehen ist.

8. Zusammenstellung nach einem der Ansprüche 1 bis 7,
**dadurch gekennzeichnet,**
**dass** an dem Fräskopf (12) zwischen der Schrägfläche (16) und der Sitzfläche (14) ein um die dortige(n) Schneidkante(n) (7) herumgeführter Freiraum (17) ausgebildet ist.

9. Zusammenstellung nach einem der Ansprüche 1 bis 8,
**dadurch gekennzeichnet,**
**dass** die Wendeplatte zufolge einer die erstgenannten Flächen über den Kopf des vorgesehenen Befestigungsmittels anhebenden Dickenzugabe (35), mit der die Dicke der Wendeplatte die Tiefe des vorgesehenen Sitzes der Wendeplatte an dem Werkzeug übersteigt, zur Schärfung der Schneidkanten nachschleifbar ist.

10. Zusammenstellung nach den Ansprüchen 7 und 9,
**dadurch gekennzeichnet,**
**dass** die Wendeplatte an den erstgenannten Flächen (2;3) sowie an den Spanflächen (5) nachschleifbar ist.

11. Zusammenstellung nach Anspruch 10,
**dadurch gekennzeichnet,**
**dass** die Wendeplatte an den erstgenannten Flächen unter einem flachen Winkel von 2 bis 10° zu den Spanflächen hin gefast (32) ist und an den Fasenflächen (32) nachschleifbar ist und zur Anordnung auf einer Sitzfläche des Fräskopfs vorgesehen ist, die unter dem um den Fasenwinkel vergrößerten Freiwinkel schräggestellt ist.

12. Zusammenstellung nach einem der Ansprüche 1 bis 11,
**dadurch gekennzeichnet,**
**dass** die Wendeplatte die Form eines Rechtecks (Fig. 1,5) oder eines Quadrates (Fig. 6) hat.

13. Zusammenstellung nach einem der Ansprüche 1 bis 12,
**dadurch gekennzeichnet,**
**dass** die Wendeplatte an den erstgenannten Flächen eingeformte flache Mulden (22) aufweist, die mit Ausmündungen an den Spanflächen (26) jeweils eine eingebuchtete Schneidkante (24;25) erzeugen.

14. Verwendung einer Zusammenstellung eines Fräskopfs und einer Wendeplatte nach einem der Ansprüche 1 bis 13 zum Fasen, insbesondere zum Anarbeiten von Schweißfasen, optischen Fasen und Kantenverrundungen an gerade verlaufenden Kanten und Konturen von Werkstücken aus Aluminium(legierungen), Stahl und anderen höherfesten Werkstoffen.

## Claims

1. Assembly of a milling head (12) and an indexable insert (1; 21; 27; 29; 31) for chamfering, wherein the milling head is conical or cylindrical, the indexable insert is provided with ground cutting edges (7) and with a bore (8) from the flank (2) to the bearing surface (3) of the indexable insert for the passage of a fastening means having a head, and a possibility of turning by rotating the indexable insert about the axis of the bore is provided,
wherein the indexable insert also provides a possibility of turning by inversion, transposing the previous bearing surface and flank, and has cutting edges formed on planar or concave rake faces (5), wherein the wedge angle of the cutting edges formed on planar rake faces is 40 to 75° and the wedge angle of the cutting edges formed on concave rake faces is 10 to 60° and the indexable insert is provided to be arranged on a seating surface of the milling head, on which seating surface the effective rake angle of said indexable insert is 6 to 47° in the case of planar rake faces and 15 to 75° in the case of concave rake faces and the clearance angle of said indexable insert is 2 to 25°.

2. Assembly according to Claim 1, **characterized in that** the flank and the bearing surface have a width of 5.5 to 12 mm.

3. Assembly according to Claim 1 or 2, **characterized in that** the indexable insert has, on those sides that have the possible rake faces (5), a groove (4) which forms the two rake faces (5) in question and, apart from any inwardly and/or outwardly curved areas (24; 25) of its rims that form the cutting edges (7), has a continuously constant cross section which is mirror-inverted with respect to the centre plane, intersecting the bore (8), of the indexable insert (1).

4. Assembly according to Claim 3, **characterized in that** the two rake faces (5) in question are planar and are preferably at an angle of 80 to 160° to one another.

5. Assembly according to Claim 3, **characterized in that** the two rake faces are concave in a manner corresponding to a groove having a round cross section.

6. Assembly according to one of Claims 1 to 5, **characterized in that** the indexable insert has, on the cutting edges, a narrow flute (30) in the rake face.

7. Assembly according to one of Claims 1 to 6, **characterized in that** a possible rake face (5) located opposite the rake face (5), used in each case, on the flank (2) is provided for the sole support of the indexable insert against the cutting force of a, preferably identically oriented, inclined surface (16) of the milling head (12) in conjunction with the fastening of the indexable insert on the seating surface (14) of the milling head by way of the fastening means.

8. Assembly according to one of Claims 1 to 7, **characterized in that** a clearance (17) is formed on the milling head (12) between the inclined surface (16) and the seating surface (14), said clearance leading around the cutting edge(s) (7) located there.

9. Assembly according to one of Claims 1 to 8, **characterized in that**, on account of an additional thickness (35) which raises the flank and bearing surface over the head of the provided fastening means and by way of which the thickness of the indexable insert exceeds the depth of the provided seat of the indexable insert on the tool, the indexable insert is regrindable in order to sharpen the cutting edges.

10. Assembly according to Claims 7 and 9, **characterized in that** the indexable insert is regrindable at the flank (2) and the bearing surface (3) and also at the rake faces (5).

11. Assembly according to Claim 10, **characterized in that** the indexable insert is chamfered (32) towards the rake faces at a shallow angle of 2 to 10° at the flank and the bearing surface, and is regrindable at the chamfered faces (32), and is provided to be arranged on a seating surface of the milling head, said seating surface being inclined at the clearance angle enlarged by the chamfer angle.

12. Assembly according to one of Claims 1, to 11, **characterized in that** the indexable insert has the form of a rectangle (Figures 1 and 5) or of a square (Figure 6).

13. Assembly according to one of Claims 1 to 12, **characterized in that** the indexable insert has shallow hollows (22) shaped into the flank and bearing surface, said shallow hollows (22) producing in each case an indented cutting edge (24, 25) with orifices in the rake faces (26).

14. Use of an assembly of a milling head and an indexable insert according to one of Claims 1 to 13 for chamfering, in particular for processing weld chamfers, optical chamfers and rounded edges on straight edges and contours of workpieces made of aluminium (alloys), steel and other higher-strength materials.

## Revendications

1. Assemblage d'une tête de fraisage (12) et d'une plaque réversible (1;21;27;29 ;31) pour le chanfreinage, la tête de fraisage étant conique ou cylindrique, la plaque réversible étant pourvue de bords de coupe (7) affûtés et d'un trou (8) allant de la surface en dépouille (2) à la surface d'appui (3) de la plaque réversible pour le passage d'un moyen de fixation présentant une tête et présentant une possibilité de retournement par rotation de la plaque réversible autour de l'axe du trou,
la plaque réversible offrant également une possibilité de retournement par inversion avec échange de la surface d'appui et de la surface libre préalables et présentant des bords de coupe formés sur des surfaces d'attaque planes ou concaves (5),
l'angle d'affûtage des bords de coupe formés sur les surfaces d'attaque planes valant 40 à 75° et l'angle d'affûtage des bords de coupe formés sur les surfaces d'attaque concaves valant 10 à 60° et la plaque réversible étant prévue pour être disposée sur une surface de siège de la tête de fraisage, sur laquelle son angle d'attaque actif, dans le cas de surfaces d'attaque planes, vaut 6 à 47° et, pour des surfaces d'attaque concaves, vaut 15 à 75° et son angle de dépouille vaut 2 à 25°.

2. Assemblage selon la revendication 1, **caractérisé en ce que** les deux premières surfaces mentionnées présentent une largeur de 5,5 à 12 mm.

3. Assemblage selon la revendication 1 ou 2, **caractérisé en ce que** la plaque réversible présente, sur les faces qui présentent les surfaces d'attaque (5) éventuelles, une gorge (4) formant les deux surfaces d'attaque (5) concernées, qui, à l'exception d'éventuelles courbures vers l'intérieur et/ou vers l'extérieur (24;25) de leurs bords formant les bords de coupe (7), présente une section continue qui reste la même et en miroir par rapport au plan central de la plaque réversible (1) passant par le trou (8).

4. Assemblage selon la revendication 3, **caractérisé en ce que** les deux surfaces d'attaque (5) concernées sont planes et se trouvent de préférence dans un angle de 80 à 160° l'une par rapport à l'autre.

5. Assemblage selon la revendication 3, **caractérisé en ce que** les deux surfaces d'attaque sont concaves conformément à une gorge de section transversale ronde.

6. Assemblage selon l'une quelconque des revendications 1 à 5, **caractérisé en ce que** la plaque réversible présente, sur les bords de coupe, une rainure moulurée étroite (30) dans le bord d'attaque.

7. Assemblage selon l'une quelconque des revendications 1 à 6, **caractérisé en ce qu'**une surface d'attaque (5) éventuelle opposée à la surface d'attaque (2) à chaque fois utilisée sur la surface en dépouille (2) est prévue, pour l'appui unique de la plaque réversible contre la force de coupe, sur une surface en biais (16), de préférence de même orientation, de la tête de fraisage (12) en interaction avec la fixation de la plaque réversible sur la surface du siège (14) de la tête de fraisage par le moyen de fixation.

8. Assemblage selon l'une quelconque des revendications 1 à 7, **caractérisé en ce qu'**un espace libre (17) est formé sur la tête de fraisage (12) entre la surface en biais (16) et la surface de siège (14) y entourant le(s) bord(s) de coupe (7).

9. Assemblage selon l'une quelconque des revendications 1 à 8, **caractérisé en ce que** la plaque réversible, suite à un supplément d'épaisseur (35), élevant les premières surfaces mentionnées au-dessus de la tête du moyen de fixation prévu, par lequel l'épaisseur de la plaque réversible dépasse la profondeur du siège prévu de la plaque réversible sur l'outil, peut être postaffûtée pour acérer les bords de coupe.

10. Assemblage selon les revendications 7 et 9, **caractérisé en ce que** la plaque réversible peut être post- affûtée sur les premières surfaces mentionnées (2 ; 3) ainsi que sur les surfaces d'attaque (5).

11. Assemblage selon la revendication 10, **caractérisé en ce que** la plaque réversible est chanfreinée (32) sur les premières surfaces mentionnées d'un angle plat de 2 à 10° par rapport aux surfaces d'attaque et peut être postaffûtée au niveau des surfaces chanfreinées (32) et est prévue pour être disposée sur une surface de siège de la tête de fraisage, qui est inclinée de l'angle de dépouille augmenté de l'angle de chanfreinage.

12. Assemblage selon l'une quelconque des revendications 1 à 11, **caractérisé en ce que** la plaque réversible présente la forme d'un rectangle (Figure 1,5) ou d'un carré (Figure 6).

13. Assemblage selon l'une quelconque des revendications 1 à 12, **caractérisé en ce que** la plaque réversible présente, sur les premières surfaces mentionnées, des creux plats moulés (22), qui génèrent par des découpes au niveau des surfaces d'attaque (26) à chaque fois un bord de coupe (24 ; 25) échancré.

14. Utilisation d'un assemblage d'une tête de fraisage et d'une plaque réversible selon l'une quelconque des revendications 1 à 13 pour le chanfreinage, en particulier pour travailler les chanfreins de soudage, les chanfreins optiques et les arrondis de bord sur des bords droits et des contours de pièces en (alliages de) aluminium, en acier et d'autres matériaux de haute résistance.
